Europäisches Patentamt

European Patent Office

Office européen des brevets

(11) Publication number: **0 289 269**
**A2**

# (12) EUROPEAN PATENT APPLICATION

(21) Application number: **88303760.8**

(22) Date of filing: **26.04.88**

(51) Int. Cl.⁴: **G 01 N 27/40**
// G01N33/49

(30) Priority: **27.04.87 GB 8709882**

(43) Date of publication of application:
**02.11.88 Bulletin 88/44**

(84) Designated Contracting States:
**CH DE FR GB IT LI NL SE**

(71) Applicant: **MediSense, Inc.**
**128 Sidney Street**
**Cambridge Massachusetts 02139 (US)**

(72) Inventor: **Wickham, Mark David**
**12, Summerfields**
**Abingdon Oxon, OX14 2PG (GB)**

**Morris, Richard Alan**
**31, Franklyn Close Hunters Knoll**
**Abingdon Oxon, OX14 1YF (GB)**

(74) Representative: **Ruffles, Graham Keith et al**
**MARKS & CLERK 57-60 Lincoln's Inn Fields**
**London WC2A 3LS (GB)**

The title of the invention has been amended (Guidelines for Examination in the EPO, A-III, 7.3).

(54) **Electrochemical sensor with red blood cell exclusion layer.**

㉗ An electrochemical sensor is provided for use with whole blood in order to effect an electrochemical measurement. The sensor has a an exclusion layer excluding at least red blood cells from contact with sensor electrodes of the sensor.

EP 0 289 269 A2

Bundesdruckerei Berlin

**Description**

## IMPROVED MEMBRANE CONFIGURATIONS

### BACKGROUND OF THE INVENTION

The present invention relates to improved membrane configurations for use in electrochemical sensors intended for use with whole blood.

Electrochemical sensors, especially amperometric electrochemical sensors of the kind described for instance in EP 127958, when contacted with blood, can detect very specifically one or more analytes present in the blood. Such sensors are based on enzyme and/or mediator systems, and can be used to detect, for example, naturally occurring metabolites such as glucose or cholesterol, or substances introduced to the body such as alcohol or drugs. In a typical mode of use, the system is set up so that there is a response at the amperometric electrochemical sensor Which is dependent on the concentration of test substance.

Whole blood is a complex mixture, predominantly aqueous, containing dissolved gases, simple dissociated and hydrated ions, materials in colloidal or otherwise complex solution, small scale cellular debris, and living cellular components. It is therefore sometimes difficult to achieve reproducible results when using whole blood samples.

### SUMMARY OF THE INVENTION

In a first aspect, the present invention provides an electrochemical sensor for contact with whole blood in order to effect an electrochemical measurement. The electrochemical sensor has at least one exclusion layer excluding at least red blood cells from contact with the sensing electrodes of the sensor.

We have realised that an improved system for the testing of whole blood enables a sensor to be contacted with the blood and permits internal sensor electrodes to record (either in a usable initial period or more permanently) the existence, amount, or continuing level of the analyte in the blood. In the present invention, the exterior of the sensor is exposed to whole blood but the sensor electrodes are exposed only to serum.

The main advantages for detection in serum rather than in whole blood are:-

1. Red blood cells themselves, and specifically the surface of the red blood cells or substances contained Within them, may interfere with the electrochemical reaction.

2. Red blood cells, which are complex entities readily capable of agglutinating and coating, may bond to the conductive electrode surfaces, whereby the surface is partially coated and blocked off from its surroundings and measurement is affected.

3. Diffusion coefficients for substances in serum are normally higher than in whole blood, giving higher measurement currents and potentially more accurate testing with a steeper calibration curve.

### PREFERRED EMBODIMENTS

The electrochemical sensor is preferably one which involves amperometric detection, and is preferably a strip sensor, especially a throw-away dry strip sensor. Accordingly the sensor electrodes preferably comprise electrode areas formed for instance by screen printing or other suitable technique. Reference is made to EP 127958, 184895, 230786, among other published European Patent Specifications in the name of MediSense Inc (formerly Genetics International Inc), and these texts are incorporated herein.

The sensor electrodes include a reference electrode (for example a silver, silver chloride electrode) and an active electrode (for example an electrode for detecting glucose, using for instance glucose oxidase and a suitable mediator substance such as a ferrocene, or for detecting other substances, such as cholesterol, paracetamol, salicylate, etc).

As will be described below in more detailed, examples of the exclusion layer include a thin solid layer, flexible or otherwise, or a void-containing layer, especially with intercommunicating voids, even if generally fibrous or similarly discontinuous in its solid phase.

Preferably the exclusion layer is such as to exclude many live cellular components, and most preferably it excludes cellular debris and like solid particles, allowing only dissolved or colloidal materials to pass through.

In one form of carrying out the present invention, there is provided an electrochemical sensor having laminated thereto, cast thereon, or layered thereover an exclusion layer in the form of a membrane which excludes red blood cells.

In this aspect the invention involves the use of a membrane which is such as to transmit serum to the sensor electrodes but which has sufficiently small pores to exclude red blood cells. Such a membrane typically consists of a synthetic polymeric material. It can be preformed as one or more sheets, or it can be laminated in situ. It can also be cast directly on to the electrodes from solution or from a melt.

A phase-inversion microporous membrane or a track etched membrane is preferred.

A phase-inversion microporous membrane can be prepared by dissolving a polymer in a solvent/non-solvent mixture, possibly with other additives, and thereafter leaving the solvent portion to evaporate. The polymer forms a porous structure over the adjacent surfaces, the porosity of which can be controlled by adjustment of the casting solution composition and the evaporating conditions.

A track etched membrane, such a Nuclepore (Trade Mark) polycarbonate or polyester membrane, is commercially available and is made by irradiation and etching to yield a thin, microporous membrane with geometric, capillary shaped pores and smooth flat faces.

The invention further extends to a dry strip electrochemical sensor which is a laminate structure (being a laminate in a general sense to include layered or stratified structures not necessarily prepared by a step of lamination) with an exclusion membrane and a layer of material containing intercommunicating voids. The membrane serves to exclude red blood cells. In the laminate structure, the sequence of layers can be membrane-voids material-electrodes, or voids material-membrane-electrodes.

In one version, this invention thus provides a laminate structure in which a membrane excluding red blood cells is laminated upon or cast upon or layered over a layer of material containing intercommunicating voids, which material is itself layered on the sensor electrode surfaces. The material with the intercommunicating voids can for example be a fibrous, spongy or woven material. In effect, this aspect of the invention provides a reservoir of serum occupying the communicating voids of the material and available at the electrode surfaces. The test substance effectively diffuses through serum and not through the whole blood, as a consequence of which higher detection currents are achieved.

Capillary action exerted by the material with these continuous voids may also assist in drawing serum through the membrane to leave the red blood cells on the further side. Possible materials for use in this embodiment include synthetic polymeric foams with intercommunicating cells, whether of a rigid or resilient nature, pads of fibrous material, especially material with inert fibers such as glass fibers, or woven inert material made e.g. from glass or synthetic polymer.

In an alternative version, the layer of material containing inrercommunicating voids is layered or laminated on the membrane excluding red blood cells, which membrane is itself cast, laminated or layered on the electrode surfaces. In this construction, the voids material acts as a pre-filter and slows down the progress of red blood cells sufficiently to prevent blocking of the membrane pores. In this way there is sufficient time for adequate serum to permeate through the membrane.

In a third aspect of the invention the surface of the sensor electrodes is covered with a material serving as the exclusion layer but having interconnecting voids of a size suitable to delay arrival of at least red blood cells to the active surface or reference surface.

The actual materials Which may be used can resemble those used in the second embodiment as discussed above. The mode of action of this embodiment is not to exclude the red blood cells permanently, but to ensure that there is a period available for measurement at which the only material seen by the electrode surface is effectively serum. Thus, in practice, there would be an initial response of a relatively high current for detection, representing the serum concentration, and a lower eventual response as red blood cells find their way through the intercommunicating voids to the electrode surface.

SPECIFIC EMBODIMENTS

The invention will be further described first with reference to Figures 1 to 3 of the accompanying drawings, in which:

Figure 1 shows in diagrammatic cross-section a first embodiment of the invention;

Figure 2 shows in similar section a second embodiment; and

Figure 3 shows in similar section a third embodiment.

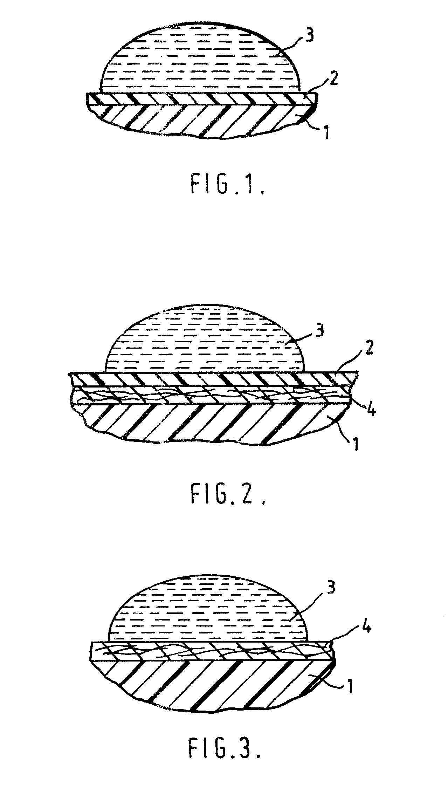

Figure 1 shows an amperometric dry strip disposable sensor with an electrode surface 1 covered immediately with a membrane 2 of for example synthetic polymeric material, laminated or cast thereon as a sheet. A sample in the form of a drop of blood 3 is placed upon the membrane, but the membrane 2 is of such a nature that only the serum components of the blood sample can penetrate and reach the electrode surface.

Such a configuration is used if red blood cell exclusion only is required, that is to say if the red blood cells contain or have on their surface substances which might interfere with the electrochemical reaction. An increase in current over that observed when using the non-protected electrode is to be expected, because the test substance is still diffusing from the whole blood through the membrane to the electrode surface.

Figure 2 shows a second embodiment of the invention. The same reference numerals as used in Figure 1, except that an additional layer 4 is provided of a fibrous or cellular material containing intercommunicating voids, which can fill and intercommunicate to provide an actual serum reservoir between the membrane and the electrode surface.

This configuration of Figure 2 not only acts as a barrier to red blood cells, but increases the detection signal because of the existence of an actual body of serum and because of the different diffusion coefficient through that serum.

Figure 3 shows a modified embodiment in which the continuous polymeric membrane is absent. However, the filter element 4 is of such a nature as to provided, at least temporarily, the function of an exclusion layer. Although red blood cells can eventually penetrate this type of layer, they traverse it considerably more slowly than the serum and the dissolved components so that at least for an initial period the electrode surface sees only serum and can take measurements accordingly. Such a configuration would be useful when an increase in signal is required, but when it is not essential for other reasons to exclude all red blood cells.

Further variations are possible. For instance, considering the embodiment of Figure 2, the positions of the membrane 2 and layer 4 can be inverted giving a laminate where the layer 4 acts a pre-filter for the membrane 2, and prevents clogging of the membrane surface.

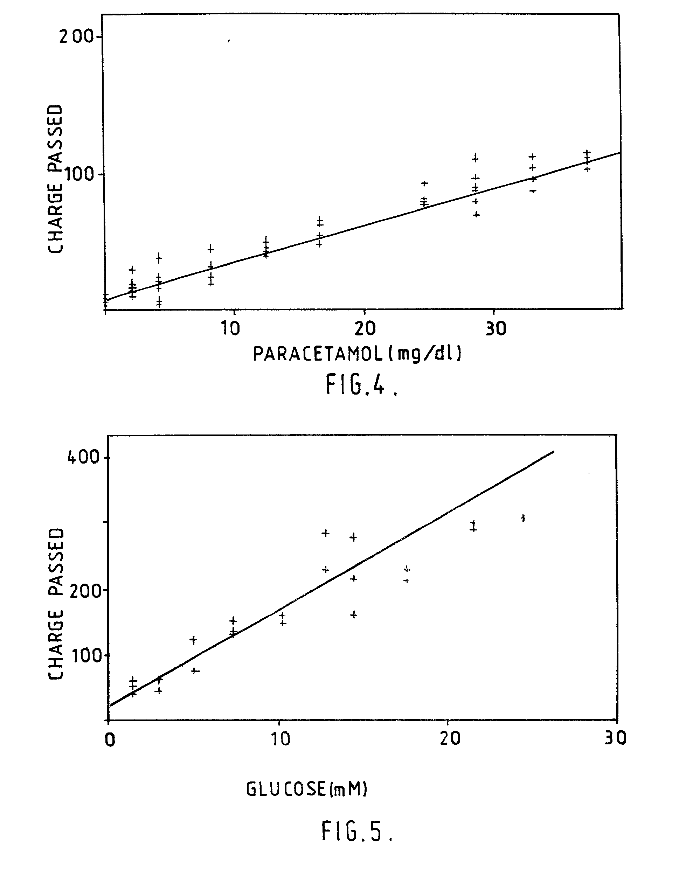

The present invention is further illustrated by the following Examples, in which reference is made to Figures 4 and 5 of the accompanying drawings, in which:

Figure 4 is a plot of current against paracetamol concentration for a paracetamol sensor of this invention, and

Figure 5 is a plot of current against glucose concentration for a glucose sensor of this invention.

## Example 1

Membranes Were placed on filter paper and 25μl of whole blood was placed on the membranes. After 15 seconds, the membranes were removed and the quantity of serum which had passed through to the filter paper was weighed.

Most membranes have a shiny surface and a matt surface, due to production characteristics. The sides usually have different filtration properties, and this factor was investigated.

As a result, it was established that Nuclepore polycarbonate membranes, shiny face upward, with pore diameter of 1.0μm. 0.8μm and 0.6μm gave suitable results.

## Example 2

Using the Nuclepore polycarbonate 0.8μm membrane, it was then found that various pre-filters could be overlaid, such as Nuclepore P300 filled or unfilled prefilter. and Sartorius SM13400 prefilter.

## Example 3

The following phase inversion membranes were shown to give good plasma separation from 25μl whole blood, when used in conjunction with the Nuclepore P300 filled prefilter:

| | | |
|---|---|---|
| 0.1 μm | Micron Separations Inc | Nylon Membrane |
| 0.45 μm | Micron Separations Inc | Nylon Membrane |
| 1.2 μm | Schleicher &; Schuell ME28 | Cellulosic Esters |
| 1.2 μm | Schleicher &; Schuell ST69 | Cellulosic Esters |
| 0.8 μm | Schleicher &; Schuell ST68 | Cellulosic Esters |
| 0.8 μm | Schleicher &; Schuell ST27 | Cellulosic Esters |
| 3.0 μm | Schleicher &; Schuell ME29 | Cellulosic Esters |
| 0.6 μm | Schleicher &; Schuell BA90 | Cellulosic Esters |
| 5.0 μm | Millipore SMWP 04700 | Cellulosic Esters |
| 8.0 μm | Millipore SCWP 04700 | Cellulosic Esters |

## Example 4

The usual whole blood response of paracetamol sensors (EP 184895) is a dog-leg shape for charge passed plotted against paracetamol concentration. However the serum response is a linear response and consequently easier to use in analogue devices.

The results of Figure 4 show that when the 0.8 μm polycarbonate Nuclepore membrane and prefilter were used on paracetamol electrodes, the linear response was achieved with whole blood indicating serum separation.

## Example 5

The main advantage of serum separation is that the electrodes give a higher response in serum than whole blood. The higher response (μamps) gives rise to a higher slope for charged pass versus concentration of analyte. The higher slope and decreased intercept in turn give rise to greater precision.

The following results for glucose sensors show that the Nuclepore polycarbonate membrane, when used with a prefilter, led to an increased slope compared with data obtained using control sensors (without a membrane or prefilter) and whole blood. The intercept also decreased in some cases, which shows that serum separation is taking place.

Control Sensors (Whole Blood 25 μl)
slope = 6.15598    intercept = 25.06888

Control Sensors (serum 25 μl) slope = 18.408    intercept = 32.454

Sensors 0.8 μm Membrane/Prefilter (Whole Blood 25 μl)
slope = 14.473    intercept = 22.050
(The results for this experiment were plotted to give Figure 5.)

Sensors 1.0 μm Membrane/Prefilter (Whole Blood 25 μl)
slope = 12.953    intercept = 33.730

## Example 6

The response shown by cholesterol sensors (EP230786) tend to become saturated and it is often difficult to delineate different cholesterol concentrations.

The following results show that serum separation is taking place when the membrane and prefilter are attached (though the system tends to saturate above 10mM cholesterol).

Results to 10 mM Cholesterol: 25 μl Whole Blood Control Sensors
slope = 0.924    intercept = 4.632

25 μl Serum (Serum optimized Sensors)
slope = 2.615    intercept = 14.584

25 μl Blood (Serum optimized Sensors + membrane/prefilter)
slope = 2.127    intercept = 8.463

**Claims**

1. An electrochemical sensor for contact with whole blood in order to effect an electrochemical measurement, which has an exclusion layer excluding at least red blood cells from contact with sensor electrodes of the sensor.

2. The sensor of claim 1, which is a disposable strip sensor for amperometric detection of an analyte.

3. The sensor of claim 1, wherein said exclusion layer includes a membrane selected from the group consisting of a phase-inversion microporous membrane and a track etched membrane.

4. The sensor of claim 1, which has a multilayer construction comprising said exclusion layer and a layer of material containing intercommunicating voids.

5. The sensor of claim 4, in which the sequence of layers is membrane-voids material-electrodes.

6. The sensor of claim 4, in which the sequence of layers is voids material-membrane-electrodes.

7. An amperometric throw-away strip sensor comprising a laminate structure in which a membrane excluding red blood cells is laminated upon or cast upon or layered over a layer of material containing intercommunicating voids, which material is itself layered on an area of sensor electrodes.

8. An amperometric throw-away strip sensor comprising a laminate structure in which a layer of material containing intercommunicating voids is layered or laminated on a membrane excluding red blood cells, which membrane is itself cast, laminated or layered on an area of sensor electrodes.

9. An amperometric throw-away strip sensor in which an area of sensor electrodes is covered with a material serving as an exclusion layer and having interconnecting voids of a size suitable to delay arrival of at least red blood cells to the sensor electrodes.

10. In an amperometric method for detection of an analyte in whole blood using a dry strip sensor electrode system, the improvement which consists of using an exclusion layer to exclude red blood cells from contact with the sensor electrodes.

FIG.1.

FIG.2.

FIG.3.

0289269

FIG.4.

FIG.5.